# EUROPEAN PATENT SPECIFICATION

(11) **EP 0 986 514 B1**
(45) Date of publication and mention of the grant of the patent: **10.04.2002**
(21) Application number: 98926373.6
(22) Date of filing: 05.06.1998
(51) Int. Cl.: C01B 3/52, B01D 53/52

(54) **ACID GAS SOLVENT FILTRATION SYSTEM**
VERFAHREN ZUM ABTRENNEN SAURER GASE AUS EINEM SYNTHESEGAS
SYSTEME DE FILTRATION DE GAZ ACIDES PAR SOLVANTS

(30) Priority: 06.06.1997 US 48784 P
(43) Date of publication of application: 22.03.2000
(73) Proprietor: TEXACO DEVELOPMENT CORPORATION, White Plains, New York 10650 (US)
(72) Inventor: WALLACE, Paul, S., Katy, TX 77450 (US); ANDERSON, M., Kay, Missouri City, TX 77459 (US); FAIR, DeLome, D., Friendswood, TX 77546 (US)
(74) Representative: Eddowes, Simon
(86) International application number: US9811743
(87) International publication number: WO9855392

(56) References cited:
- EP-A- 0 013 049
- GB-A- 1 102 943
- US-A- 4 039 619
- DATABASE WPI Section Ch, Week 7715 Derwent Publications Ltd., London, GB; Class E36, AN 77-26167Y XP002077793 & JP 52 028470 A (HITACHI LTD) , 3 March 1977

## Description

This application claims priority from provisional patent application serial number 60/048,784 filed on June 6, 1997, entitled ACID GAS SOLVENT FILTRATION SYSTEM.

### FIELD OF THE INVENTION

The invention relates to removing acid gases from syngas, and more particularly to separating and recycling the resulting particulate solids to the gasification reactor.

### BACKGROUND OF THE INVENTION

The production of syngas from the solid and liquid carbonaceous fuels, especially coal, coke, and liquid hydrocarbon feeds, has been utilized for a considerable period of time and has recently undergone significant improvements due to the increased energy demand. Syngas may be produced by heating carbonaceous fuels with reactive gases, such as air or oxygen, often in the presence of steam in a gasification reactor to obtain the fuel gas which is withdrawn from the gasification reactor. The syngas is then subjected to several cleansing operations to rid it of various contaminants which are formed or liberated from the feed during the gasification operation. These materials can readily become contaminate down stream process units if not properly treated during the gasification operation.

For example, materials often found in the syngas include hydrogen sulfide, ammonia, cyanides, and particulates in the form of carbon and trace metals. The extent of the contaminants in the feed is determined by the type of feed and the particular gasification process utilized as well as the operating conditions. In any event, the removal of these contaminants is critical to make gasification a viable process.

As the product gas is discharged from the gasifier, it is usually subjected to a cooling and cleaning operation involving a scrubbing technique wherein the gas is introduced into a scrubber and contacted with a water spray which cools the gas and removes particulates and ionic constituents from the syngas. The initially cooled gas may then be treated to desulfurize the gas prior to utilization of the product gas.

### SUMMARY OF THE INVENTION

The invention is a process for separating acid gases from synthesis gas and treating the resulting solids. A mixture comprising synthesis gas and acid gas is contacted with a fluid that reacts with said acid gas to form a slurry of particulate solid dispersed in a fluid and synthesis gas. The slurry comprising fluid and particulate solid is separated from the synthesis gas in a conventional separator or by other means. The slurry is then filtered to separate said particulate solid from said fluid by means of a regenerable filter. The particulate solids are removed from the regenerable filter by back-washing with a back-washing fluid to form a pumpable slurry comprising a mixture of particulate solids and back-washing fluid.

### DETAILED DESCRIPTION OF THE INVENTION

As used herein, a "fluid that reacts with acid gas" includes fluids that preferentially dissolve acid gases as well as fluids that contain one or more compounds that are either dissolved, dispersed, or suspended therein that react with acid gases. The fluid itself may be an inert.

As used herein, "acid gases" comprise hydrogen sulfide, carbon dioxide, or a mixture thereof. Other trace acid gases may be present. The fluid may react with one or both of these acid gases. Typical fluids may include an amine such as ethanolamine. The fluids may be solvents such as lower monohydric alcohols, such as methanol, or polyhydric alcohols such as ethylene glycol and the like.

As used herein, "synthesis gas" or "syngas" comprises gas comprising carbon monoxide, hydrogen, and occasionally inerts such as nitrogen.

As used herein, a "regenerable filter" is a filter that, as it becomes loaded and partially plugged with solids, can be regenerated. Regeneration is usually accomplished by removing the filter from service, and then reversing the flow direction and back-washing particles from the filter face. The backwashed material is a slurry that is advantageously isolated from the process stream. Then, when sufficient material has been backwashed, the direction of flow is again reversed and the filter is put back into service.

The invention is a process for separating acid gases from synthesis gas and treating the resulting solids. Syngas may be produced by heating carbonaceous fuels with reactive gases, such as air or oxygen, often in the presence of steam in a gasification reactor to obtain the fuel gas which is withdrawn from the gasification reactor. The syngas so manufactured often contain contaminants such as acid gases. A mixture comprising synthesis gas and acid gas is contacted with a fluid that reacts with said acid gas to form a particulate solid dispersed in a fluid and synthesis gas. Contacting is usually in a counter-current bubble tray or packed tower, but any type of contacting, including jet scrubbers, reverse jet scrubbers, and venturi scrubbers may be used. The type of contacting apparatus is not important.

Similarly, the type of fluid that reacts with the acid gas is not important. There are many fluids, particulates, and suspensions known to the art to remove acid gases. See, for example, U.S. Patent 4,039,619, U.S. Patent 4,052,176, U.S. Patent 4,496,371, U.S. Patent 4,769,045, U.S. Patent 5,289,676, and U.S. Patent 5,447,702, the disclosures of which are incorporated herein by reference. The fluid may contain an amine such as diethanolamine, methanol, N-methyl-pyrrolidone, or a dimethyl ether of polyethylene glycol. The fluid may contain particulate iron, caustic salts, carbonates, iron oxides, nickel, nickel oxides, or a combination thereof.

The slurry comprising fluid and particulate solid is separated from the synthesis gas in a separation zone in a tower, in a conventional separator, or by other means. Separation of a slurry from a gas is well known in the art.

The slurry is then filtered to separate said particulate solid from said fluid by means of a regenerable filter. It is often advantageous to have pre-concentration steps such as settling in a settler or centrifuging to increase the solids load of the slurry prior to filtering. However, the slurry can be filtered without pre-concentration.

The slurry is filtered by being forced by a pressure drop through filters. The filters remove a fraction, often more than 70%, of the solids in the slurry. The filters allow fluid, and occasionally some solids, to pass through and be recycled to the contactor. As these solids accumulate on the filter, a filter cake is formed. The differential pressure increases until it reaches a point where flow though the filter in impaired. At some point before the filter is completely plugged, the filter is taken out of service.

The fluid that reacts with acid gas is expensive, so it may be advantageous to displace this fluid with a less expensive back-washing fluid. It is preferred to displace the fluid that reacts with acid gas through the filter in the same direction that the process normally flows, so as to not load the fluid that reacts with acid gas with solids. The fluid displacing the fluid that reacts with acid gas is not critical. The fluid that reacts with acid gas can be displaced with among other things water, a hydrocarbon, an alcohol, a gas, or a vapor. It is advantageous to displace the fluid that reacts with acid gas with the back-washing fluid.

The particulate solids are removed from the regenerable filter by back-washing with a back-washing fluid to form a pumpable slurry comprising a mixture of particulate solids and back-washing fluid. This slurry can be treated as waste or can be recycled to the gasification reactor wherein organics will be gasified, and the particulates will be vitrified, thereby rendering both environmentally harmless. The back-washing fluid should be compatible with its subsequent fate. The back-washing fluid can be water, a hydrocarbon, an alcohol, or other compatible fluid. Of course, it may be simplest and most economical to use fluid that reacts with acid gas as the back-washing fluid. The back-washing fluid need not necessarily be miscible with the fluid that reacts with acid gas, though it is often advantageous that it be so. Water is often preferred, since the water is inexpensive and may itself be a waste stream from another process.

The regenerable filter can be any type of back-washable filter. One preferred commercial embodiment is the sock filter. This is a fabric filter covering an interior support into which fluids can enter and be withdrawn. The process stream flows from outside the sock, through the fabric of the sock, and into the interior support. The solids accumulate on the outside of the sock until they are backwashed.

It is advantageous to have two or more socks capable of running in parallel in a system. A control system can place one filter off line by isolating it from the contactor. Then, advantageously, the fluid that reacts with acid gas can be displaced from the filter. Finally, fluid can be injected through the center support and outward through the sock at a velocity sufficient to remove the particulate solids. Then, the back-washing fluid is advantageously displaced by fluid that reacts with acid gas, and the filter is brought back into service.

It is advantageous that the slurry be pumpable. This reduces the handling costs, and allows easy recycling to the gasification reactor. The pumpable slurry is advantageously pumped back into the gasification reactor. The liquid and any organics are gasified in the reactor. The solids are vitrified, which stabilizes the solids for non-hazardous disposal.

## Claims

1. A process for separating acid gases from synthesis gas comprising
a. contacting a mixture comprising synthesis gas and acid gas with a fluid that reacts with said acid gas to form a particulate solid dispersed in a fluid and synthesis gas;
b. separating the synthesis gas from a slurry comprising fluid and particulate solid:
c. separating said particulate solid from said fluid by means of a regenerable filter:
d. back-washing said particulate solid from said regenerable filter with a back-washing fluid to form a pumpable slurry comprising a mixture of particulate solids and back-washing fluid:
e. pumping said pumpable slurry to a gasification rector, wherein the slurry is gasified to form synthesis gas and vitrified solids.

2. The process of claim 1 wherein the fluid that reacts with acid gas comprises an amine.

3. The process of claim 1 wherein the particulate solid comprises iron sulfide.

4. The process of claim 1 wherein the back-washing fluid comprises water.

5. The process of claim 1 wherein the fluid that reacts with acid gas comprises an iron compound.

6. The process of claim 1 wherein the regenerable filter is a sock filter.

7. The process of claim 1 wherein a plurality of sock filters is employed in step (c).

8. The process of claim 1 separating said particulate solid from said fluid by means of at least one of at least two regenerable filters, and further comprising the step of controlling the process such that at least one filter is separating said particulate solid from said fluid that reacts with acid gas while at least one regenerable filter is backwashed.

9. The process of claim 1 wherein the fluid that reacts with said acid gases in step (a) is cmployed as a back-washing fluid in step (d).

10. The process of claim 1 wherein the back-washing fluid comprises a compound selected from the group consisting of a hydrocarbon, an alcohol, water, and mixtures thereof.

11. The process of claim 1 that further comprises displacing the fluid that reacts with an acid gas from the regenerable filters with a compound selected from one or more of a hydrocarbon, an alcohol, water, or other back-washing fluid prior to back-washing.

## Patentansprüche

1. Verfahren zur Trennung saurer Gase von Synthesegas umfassend:
a. Inkontaktbringen einer Mischung, die Synthesegas und saures Gas umfasst, mit einer Flüssigkeit, die mit dem sauren Gas reagiert, um in einer Flüssigkeit dispergierte Feststoffteilchen und Synthesegas zu bilden;
b. Trennen des Synthesegases von einem Schlamm, der Flüssigkeit und Feststoffteilchen umfasst;
c. Trennen der Feststoffteilchen von der Flüssigkeit mittels eines regenerierbaren Filters;
d. Rückwaschen der Feststoffteilchen vom regenerierbaren Filter mit einer Rückwaschflüssigkeit, um einen pumpfähigen Schlamm zu bilden, der eine Mischung von Feststoffteilchen und Rückwaschflüssigkeit umfasst;
e. Pumpen des pumpfähigen Schlamms in einen Vergasungsreaktor, worin der Schlamm zur Bildung von Synthesegas und gesinterten Feststoffen vergast wird.

2. Verfahren nach Anspruch 1, wobei die Flüssigkeit, die mit sauren Gas reagiert, ein Amin umfasst.

3. Verfahren nach Anspruch 1, wobei die Feststoffteilchen Eisensulfid umfassen.

4. Verfahren nach Anspruch 1, wobei die Rückwaschflüssigkeit Wasser umfasst.

5. Verfahren nach Anspruch 1, wobei die Flüssigkeit, die mit dem sauren Gas reagiert, eine Eisenverbindung umfasst.

6. Verfahren nach Anspruch 1, wobei der regenerierbare Filter ein Sockenfilter ist.

7. Verfahren nach Anspruch 1, wobei mehrere Sockenfilter im Schritt (c) eingesetzt werden.

8. Verfahren nach Anspruch 1 zum Trennen der Feststoffteilchen von der Flüssigkeit mittels wenigstens einem von wenigstens zwei regenerierbaren Filtern, das ferner den Schritt einer derartigen Steuerung des Verfahrens umfasst, dass wenigstens ein Filter die Feststoffteilchen von der Flüssigkeit, die mit saurem Gas reagiert, trennt, während wenigstens ein regenerierbarer Filter rückgewaschen wird.

9. Verfahren nach Anspruch 1, wobei die Flüssigkeit, die mit dem sauren Gas in Schritt (a) reagiert, als eine Rückwaschflüssigkeit in Schritt (d) eingesetzt wird.

10. Verfahren nach Anspruch 1, wobei die Rückwaschflüssigkeit eine Verbindung ausgewählt aus der Gruppe bestehend aus einem Kohlenwasserstoff, einem Alkohol, Wasser und Mischungen davon umfasst.

11. Verfahren nach Anspruch 1, das ferner den Austausch der mit einem sauren Gas reagierenden Flüssigkeit von den regenerierbaren Filtern mit einer Verbindung, ausgewählt von einem oder mehreren eines Kohlenwasserstoffs, eines Alkohols, Wasser oder anderen Rückwaschflüssigkeit, vor dem Rückwaschen umfasst.

## Revendications

1. Procédé pour séparer des gaz acides des gaz de synthèse, comprenant:
a. la mise en contact d'un mélange comprenant un gaz de synthèse et un gaz acide, avec un fluide qui réagit avec le gaz acide pour former un solide particulaire dispersé dans un fluide et le gaz de synthèse ;
b. la séparation du gaz de synthèse à partir d'une suspension comprenant le fluide et le solide particulaire ;
c. la séparation du solide particulaire à partir du fluide par le moyen d'un filtre régénérable ;
d. la ré-extraction du solide particulaire à partir du filtre régénérable avec un fluide de ré-extraction pour former une suspension pompable comprenant un mélange de solides particulaires et de fluide ré-extrait ;
e. le pompage de la suspension pompable vers un réacteur de gazéification, dans lequel la suspension est gazéifiée pour former le gaz de synthèse et des solides vitrifiés.

2. Procédé selon la revendication 1,
**caractérisé en ce que**
le fluide qui réagit avec le gaz acide comprend une amine.

3. Procédé selon la revendication 1,
**caractérisé en ce que**
le solide particulaire comprend du sulfure de fer.

4. Procédé selon la revendication 1,
**caractérisé en ce que**
le fluide de ré-extraction comprend de l'eau.

5. Procédé selon la revendication 1,
**caractérisé en ce que**
le fluide qui réagit avec le gaz acide comprend un composé à base de fer.

6. Procédé selon la revendication 1,
**caractérisé en ce que**
le filtre régénérable est un filtre chaussette.

7. Procédé selon la revendication 1,
**caractérisé en ce que**
une diversité de filtres chaussette est utilisée dans l'étape c).

8. Procédé selon la revendication 1,
séparant le solide particulaire à partir du fluide par le moyen d'au moins un au moins des deux filtres régénérables, et ensuite comprenant l'étape de contrôler le procédé de manière à ce qu'au moins un filtre permette de séparer le solide particulaire à partir du fluide qui réagit avec le gaz acide tandis qu'au moins un filtre régénérable est ré-extrait.

9. Procédé selon la revendication 1,
**caractérisé en ce que**
le fluide qui réagit avec le gaz acide dans l'étape a) est utilisé comme un fluide de ré-extraction dans l'étape d).

10. Procédé selon la revendication 1,
**caractérisé en ce que**
le fluide de ré-extraction comprend un composé choisi parmi le groupe constitué d'un hydrocarbure, d'un alcool, de l'eau, et de leur mélange.

11. Procédé selon la revendication 1,
comprenant en outre
le déplacement du fluide qui réagit avec un gaz acide provenant des filtres régénérables avec un composé choisi parmi un ou plusieurs des éléments suivants, hydrocarbure, alcool, eau, ou autre fluide de ré-extraction avant la ré-extraction.
